# FASCICULE DE BREVET EUROPEEN

(11) **EP 0 648 368 B1**
(45) Date de publication et mention de la délivrance du brevet: **18.09.1996**
(21) Numéro de dépôt: 93914791.4
(22) Date de dépôt: 01.07.1993
(51) Int. Cl.: G11B 15/56

(54) **APPAREIL PERMETTANT L'ENREGISTREMENT ET LA LECTURE DECALEE D'UNE BANDE TELLE QUE MAGNETIQUE**
GERÄT, DAS DIE (GLEICHZEITIGE ODER) VERSETZTE AUFZEICHNUNG UND WIEDERGABE EINES BANDES,Z.B. MAGNETISCH, ERLAUBT
RECORDING AND TIME-DELAYED PLAYBACK APPARATUS AS FOR MAGNETIC TAPE

(30) Priorité: 01.07.1992 FR 9208085
(43) Date de publication de la demande: 19.04.1995
(73) Titulaire: HAYAT, Marc, F-75009 Paris (FR); DE FERRAN, Max, F-78550 Bazainville (FR)
(72) Inventeur: HAYAT, Marc, F-75009 Paris (FR); DE FERRAN, Max, F-78550 Bazainville (FR)
(74) Mandataire: Pontet, Bernard
(86) Numéro de dépôt international: FR9300666
(87) Numéro de publication internationale: WO9401863

(56) Documents cités:
- WO-A-90/00800
- DE-A- 2 543 064
- DE-A- 2 632 159
- DE-A- 3 005 328
- GB-A- 685 067
- GB-A- 1 371 672
- US-A- 3 596 818
- US-A- 3 776 488
- US-A- 4 150 261
- US-A- 4 388 659
- EDN ELECTRICAL DESIGN NEWS vol. 8, no. 9, August 1963, NEWTON, MASSACHUSETTS US, pages 18 - 21, E. P. WIESNER 'Time-Delay Tape Transport Provides System Advantages' cited in the application
- US-E-RE28461 (LEMELSON), 1 July 1975

## Description

La présente invention concerne d'une manière générale un appareil d'enregistrement et de lecture d'une bande susceptible d'être enregistrée et lue telle qu'une bande de magnétoscope ou de magnétophone.

Les appareils de ce type existant sur le marché comportent une seule mécanique porte-têtes sur laquelle se trouvent à la fois les moyens d'enregistrement des signaux électriques sur une bande magnétique et les moyens de restitution par lecture de tels signaux.

Lors de l'enregistrement la bande est amenée en contact avec le porte-tête et les signaux sont appliqués sur la tête.

Lors de l'opération inverse c'est à dire la lecture, la bande est de nouveau mise en contact avec le porte-tête. Les messages enregistrés sont analysés par la ou les têtes afin de reconstituer les signaux vidéo ou audio précédemment enregistrés.

Les fonctions enregistrement ou lecture sont exclusives l'une de l'autre.

De plus, ce type d'appareil comporte deux bobines, souvent regroupées dans une cassette, et recevant chacune la bande sur une certaine longueur à partie de l'une respective de ses extrémités. Les vitesses de rotation de ces deux bobines sont asservies l'une à l'autre.

Il en est ainsi aussi bien pour des enregistrements de son que pour des enregistrements d'images.

L'inconvénient de ces appareils est que l'on ne peut procéder qu'exclusivement soit à l'enregistrement sur la bande soit à la lecture de la bande, sans pouvoir faire les deux à la fois et celà indépendamment l'un de l'autre. Ainsi, lorsque l'on commence à enregistrer une émission à l'aide d'un magnétoscope, il est nécessaire d'attendre la fin de l'émission pour pouvoir la reproduire en entier. Autrement dit l'utilisateur n'a pas la possibilité, en cours d'enregistrement, de lire le début de cet enregistrement.

On connaît encore d'après le document EDN ELECTRICAL DESIGN NEWS vol. 8 n°9, Août 1963, Newton, Massachusetts, pages 18 à 21 un dispositif d'enregistrement et lecture de données informatiques qui comprend deux jeux de têtes d'enregistrement et de lecture, et une bobine pour chaque jeu de têtes. Il y a un magasin de stockage pour recevoir une certaine longueur de bande et la stocker en plis lâches et aléatoires lorsque l'un des jeux de têtes est utilisé par exemple pour lire avec un retard constant ce qui a été enregistré, ou pour enregistrer et lire à des vitesses différentes. Les deux bobines sont commandées indépendamment l'une de l'autre, de même que les deux jeux de têtes. Dans le cadre d'une structure à lecture décalée, on peut appeler bobine de lecture la bobine sur laquelle s'enroule la bande au cours d'une lecture normale, et bobine d'enregistrement celle à partir de laquelle la bande est déroulée vers la tête réalisant l'enregistrement.

Selon ce document, il s'agit surtout de traiter des données informatiques enregistrées sur bande, avec un certain délai entre l'enregistrement et la lecture.

Ce dispositif connu est encombrant puisqu'il faut bien que la bande, à partir de la bobine d'enregistrement, passe à la tête d'enregistrement puis au magasin de stockage intermédiaire, puis à la tête de lecture pour arriver enfin à la bobine de lecture, sans parler des mécanismes de guidage de la bande selon des trajets variables.

Il en résulte que l'appareil connu est en forme d'armoire murale.

Le US-Re 28461 décrit un appareil de lecture de cassette dans lequel, de chaque côté de la tête de lecture, la bande passe dans un puits d'aspiration. Un moyen particulier est prévu pour amener une boucle de bande depuis la cassette vers l'entrée de chaque puits. Ces puits ont pour but de réguler la tension de la bande. Les deux bobines tournent pour chaque utilisation.

On connait par ailleurs d'après le US-A-4 388 659 et le WO-A-90/00800 des appareils ayant sensiblement le même objet que le document EDN, mais qui apparaissent non seulement encombrants, mais aussi fort complexes, avec un stockage au moins en partie ordonné de la bande entre la tête d'enregistrement et la tête de lecture.

Le WO-A-90/00800 prétend offrir au grand public la possibilité d'enregistrer et de lire indépendamment une bande. Or, ce document préconise de laisser la bande à demeure dans l'appareil. Ceci est contraire aux desiderata du grand public, qui souhaite avoir une bibliothèque d'enregistrements.

On connait encore d'après le JP-A-4 104 678 qui reflete l'état de la technique la plus proche, un appareil à cassette offrant la possibilité de lecture décalée possédant une tête d'enregistrement, une tête de lecture et une structure pour stocker une partie enregistrée de la bande entre les têtes. Cependant, cet appareil ne présente pas de moyens pour réaliser un défilement de la bande enregistrée en marche arrière depuis la bobine de lecture vers le magasin de stockage. L'utilisateur sera privé des possibilités qu'offrent les magnétophones et magnétoscopes classiques. Il ne pourra pas faire de recherche arrière, rapide ou lente, avec ou sans lecture, tout en continuant l'enregistrement.

Dans tous les appareils connus permettant la lecture décalée, la mise en place de la bande est soit non précisée, soit rendue très complexe par la présence du stockage intermédiaire. Le fait que le WO-A-90/00800 préconise de ne pas changer la bande souligne cet aspect.

Le but de la présente invention est ainsi de proposer un appareil offrant la possibilité de Lecture décalée et qui soit agencé d'une manière parfaitement compatible avec l'utilisation grand public en matière de coût, d'encombrement et de mode d'utilisation.

Suivant l'invention l'appareil permettant l'enregistrement et la lecture simultanée ou décalée d'une bande d'enregistrement telle qu'une bande de magnétoscope ou de magnétophone, comportant une tête d'enregistrement, des moyens pour faire circuler la bande devant la tête d'enregistrement vers et respectivement à partir d'une bobine d'enregistrement, une tête de lecture, des moyens pour faire circuler la bande devant la tête de lecture vers et respectivement à partir d'une bobine de lecture, les têtes étant munies l'une et l'autre de moyens permettant de les mettre en oeuvre indépendamment l'une de l'autre, et d'autre part un magasin de stockage, situé fonctionnellement entre les deux tètes pour recevoir une partie de la bande et la stocker lorsque la région de la bande située devant la tête de lecture est distante de la région de la bande située devant la tête d'enregistrement, et ledit appareil comprenant des moyens de montage pour une cassette à deux bobines associées chacune à l'une des extrémités de la bande, les têtes d'enregistrement et de lecture étant agencées pour coopérer chacune avec l'une des bobines de la cassette, qui constituent en service l'une la bobine d' enregistrement et l'autre, respectivement, la bobine de lecture, est caractérisé en ce que l'appareil comprend en outre des moyens pour amener la bande en position relativement au magasin de stockage après mise en place de la cassette, le magasin de stockage stockant ladite bande en plis lâches et aléatoires, et en ce que l'appareil comprend des moyens pour amener la bande, en marche arrière par rapport à la direction d'enregistrement depuis la bobine de lecture vers le magasin de stockage.

L'invention combine la solution "ordonnée" représentée par les cassettes à deux bobines, avec le "désordre" représenté par le stockage en plis lâches et aléatoires d'une partie, pouvant être relativement longue, de la bande.

Grâce au regroupement des deux bobines dans une cassette, qui peut être une cassette de format actuellement dans le commerce pour un appareil classique, on simplifie considérablement l'utilisation, y compris le chargement et le déchargement de l'appareil. L'utilisateur n'a même plus à tenir compte de la présence du magasin intermédiaire, les moyens pour amener la bande en relation avec le magasin effectuent la mise en place nécessaire.

La présente invention permet, notamment aux utlisateurs grand public, ce que l'on nomme ici la "lecture décalée" consistant, pendant qu'un enregistrement est en cours, à lire la même bande en un point quelconque situé entre son début et le point d'enregistrement. Il est possible de faire reculer la bande en face de la tête de lecture sans interrompre le processus d'enregistrement.

L'utilisateur a de plus la possibilité d'effectuer une lecture rapide de la partie enregistrée afin d'éventuellement rattraper le temps en passant rapidement sur les passages ne l'intéressant pas, pour finir de suivre l'émission en direct.

L'appareil selon l'invention peut également être utilisable comme un appareil usuel, et possède à cet effet une avance et un retour rapide. Il peut être utilisable en lecture seule ou enregistrement seul, et dans le cas d'un magnétoscope en arrêt sur image.

Il s'est avéré possible de déposer une bande en plis lâches, de façon aléatoire, dans un boîtier rectangulaire si l'on empêche cette bande de se coucher sur le côté. Pour cela, on utilise un magasin ayant la même largeur que la bande et on emploie des moyens l'empêchant de se coucher sur le côté. Ceci est obtenu de préférence en disposant le magasin en position verticale de façon à utiliser la force de pesanteur mais peut être obtenu par soufflage ou aspiration ou tout autre moyen analogue. Il s'est avéré à l'usage que l'on peut ainsi faire débiter la bobine d'enregistrement dans le magasin sans l'extraire au moyen de l'autre bobine ; la bande se dépose en plis superposés ou juxtaposés de façon aléatoire et sans faire de noeuds. On peut ensuite, tout en laissant débiter la bobine d'enregistrement, mettre en marche la bobine de lecture qui extrait la bande toujours sans faire de noeuds. On peut même faire marcher la bande de lecture en marche arrière de façon que les deux bobines débitent en même temps dans le magasin : à la reprise les brins de la bandé glissent les uns contre les autres et les plis se défont sans s'embrouiller.

De préférence, l'appareil est caractérisé en ce qu'il comprend en outre des rouleaux permettant de déplacer la bande de la bobine de lecture vers le magasin de stockage à différentes vitesses en marche arrière avec ou sans lecture de ladite bande.

L'appareil selon l'invention est encore remarquable en ce que :
- le magasin de stockage a une entrée disposée entre lesdits porte-têtes de lecture et d'enregistrement,
- le magasin de stockage a dans le sens de la largeur de la bande une dimension égale à la largeur de la bande,
- il est prévu des moyens pour détecter l'épuisement de la réserve de bande dans le magasin, et indépendamment ou conjointement, des moyens pour tirer la bande en boucle vers l'intérieur du magasin à partir de la situation où une cassette vient d'être mise en place dans l'appareil,
- un détecteur de tension de bande est disposé entre les deux bobines,
- lorsque la bande est stockée dans le magasin, le détecteur est utilisé pour indiquer que ledit magasin de stockage est vide lorsqu'il est en contact avec la bande,
- le détecteur est composé d'un rouleau fou se déplaçant verticalement sur un chariot pour tirer la bande en position de fonctionnement vers l'intérieur du magasin de stockage à partir de la situation où la cassette vient d'être mise en place,
- les mécanismes de guidage et d'entrainement de la bande sont constitués de cinq rouleaux pour chacune des deux bobines, trois rouleaux fous et deux rouleaux entraîneurs pour la bobine de lecture ainsi que trois rouleaux fous et deux rouleaux entraîneurs pour La bobine d'enregistrement,
- les rouleaux fous sont montés soit sur des barrettes actionnées par des pivots, soit sur des chariots se déplaçant dans des glissières selon la longueur du déplacement nécessaire pour les rendre actifs,
- les rouleaux entraîneurs de la bobine de leture n'ont pas le même sens de rotation alors que les rouleaux entraîneurs de la bobine d'enregistrement ont le même sens de rotation,
- le magasin peut comporter une ouverture d'entrée/sortie relativement étroite associée à des moyens pour guider une boucle de bande vers l'intérieur du magasin, de façon qu'entre la tête d'enregistrement et la tête de lecture la bande entre et sorte du magasin, réalisé en cul-de-sac.

L'invention sera mieux comprise par la description qui va suivre en référence au dessin sur lequel on a représenté à titre d'exemple non limitatif un appareil destiné à une bande vidéo pour magnétoscope et sur lequel :
- la figure 1 est une vue de côté en coupe d'un magnétoscope selon l'invention ;
- la figure 2 montre le mécanisme d'entraînement de la bande vidéo du magnétoscope de la figure 1 ;
- la figure 3 est une vue de face du magasin porte cassette ; et
- la figure 4 est une vue de face en coupe de l'appareil montrant le magasin de stockage de la bande vidéo.

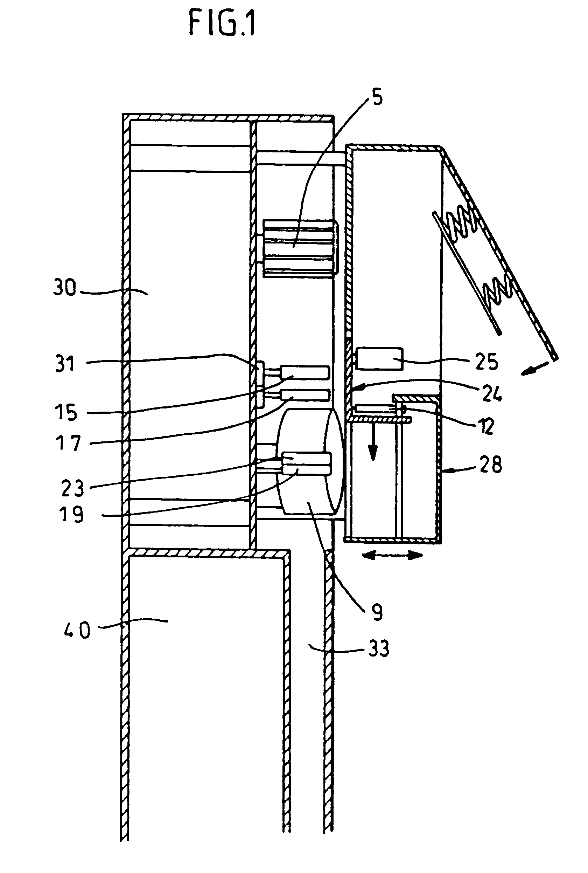

Comme visible à la figure 1, le magnétoscope comporte mis à part les compartiments 30 et 40 destinés à contenir les moyens de commande mécaniques et électroniques, un magasin porte-cassette 28 et un magasin de stockage 33.

Dans cet exemple le magasin de stockage 33 est disposé verticalement de façon que, par gravité, la bande se dépose en plis lâches. Cependant l'invention n'est pas limitée à ce mode particulier et au lieu d'utiliser la force gravitationnelle on peut utiliser une autre force comme par exemple un soufflage ou une aspiration.

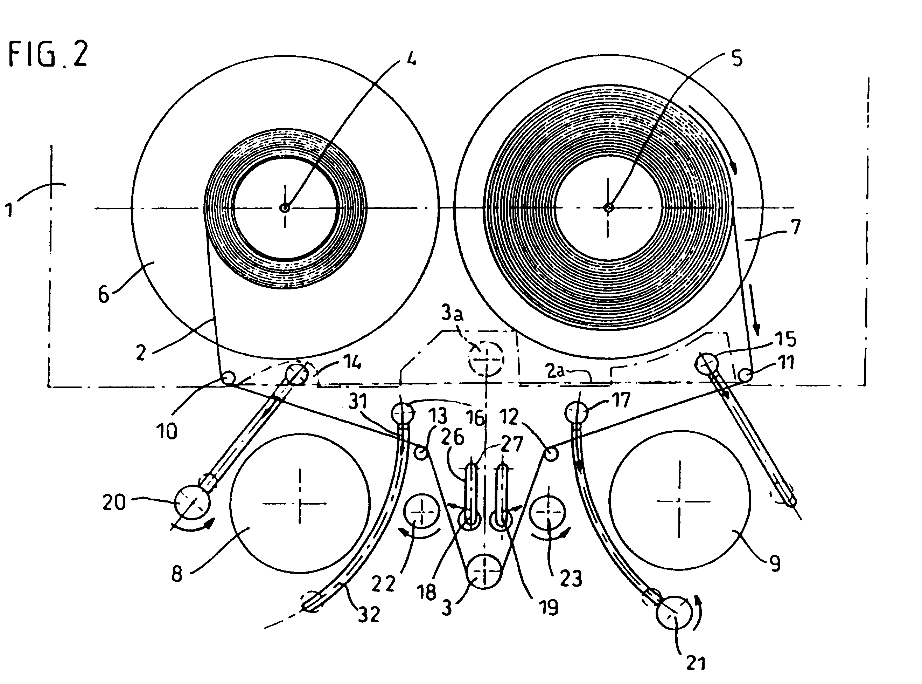

Comme représenté à la figure 2, le mécanisme d'entraînement du magnétoscope comporte deux axes d'entraînement 4, 5, respectivement de la bobine de lecture 6 et de la bobine d'enregistrement 7, deux porte-têtes vidéo, un porte-tête de lecture 8 et un porte-tête d'enregistrement 9, des rouleaux fous passifs 10, 11, 12, 13, des rouleaux fous actifs 14, 15, 16, 17, 18, 19 montés soit sur une baguette 26 actionnée par un pivot 27 pour les rouleaux 18 et 19, soit sur des chariots 31 se déplaçant dans des glissières 32 pour les rouleaux 14, 15, 16, 17, et des rouleaux d'entraînement 20, 21, 22, 23.

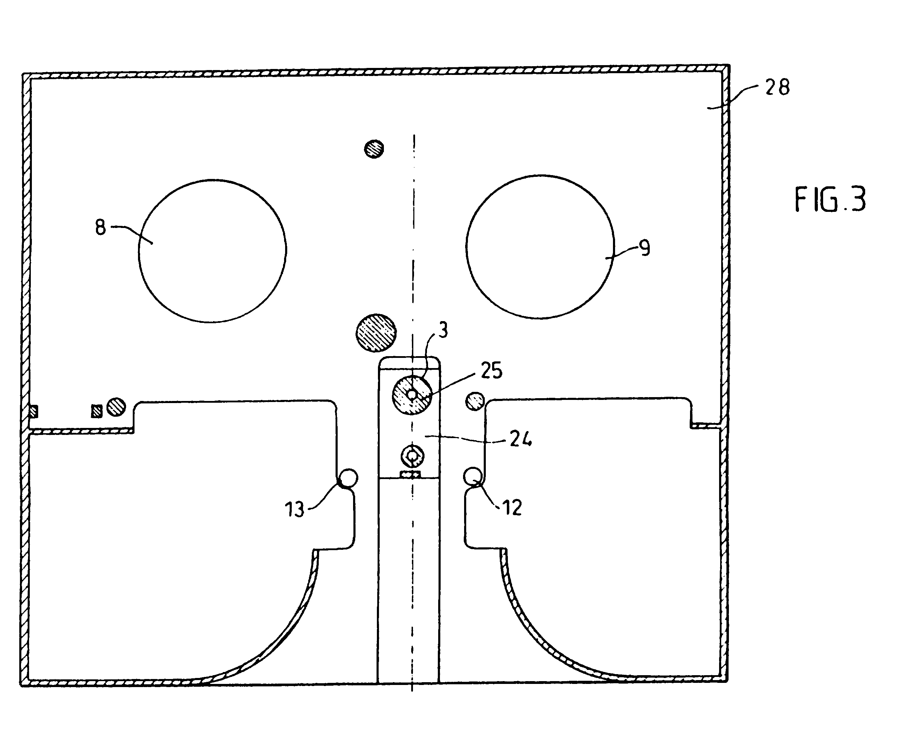

Comme mieux visible à la figure 3, le magasin de stockage 33 a une entrée supérieure relativement étroite disposée entre lesdits porte-têtes de lecture 8 et d'enregistrement 9.

Dans le cas d'un magnétoscope les têtes d'enregistrement et de lecture sont elles mêmes mobiles de façon à ce que la bande soit plaquée contre elles sur environ 180° et elles sont alors portées par des supports mobiles que l'on appellera ci-après "porte-tête".

La cassette 1 comportant de manière connue en soi les bobines de lecture et d'enregistrement portant la bande 2 est introduite manuellement dans le magasin porte cassette 28, elle est fixée grâce aux axes d'entraînement des bobines 4, 5 et aux rouleaux fous passifs 10, 11. Le protège bande de la cassette 1 s'ouvre et la bande 2 vient se positionner en 2a entre le détecteur 3, ayant alors la position 3a (figure 2), et les rouleaux passifs 12, 13.

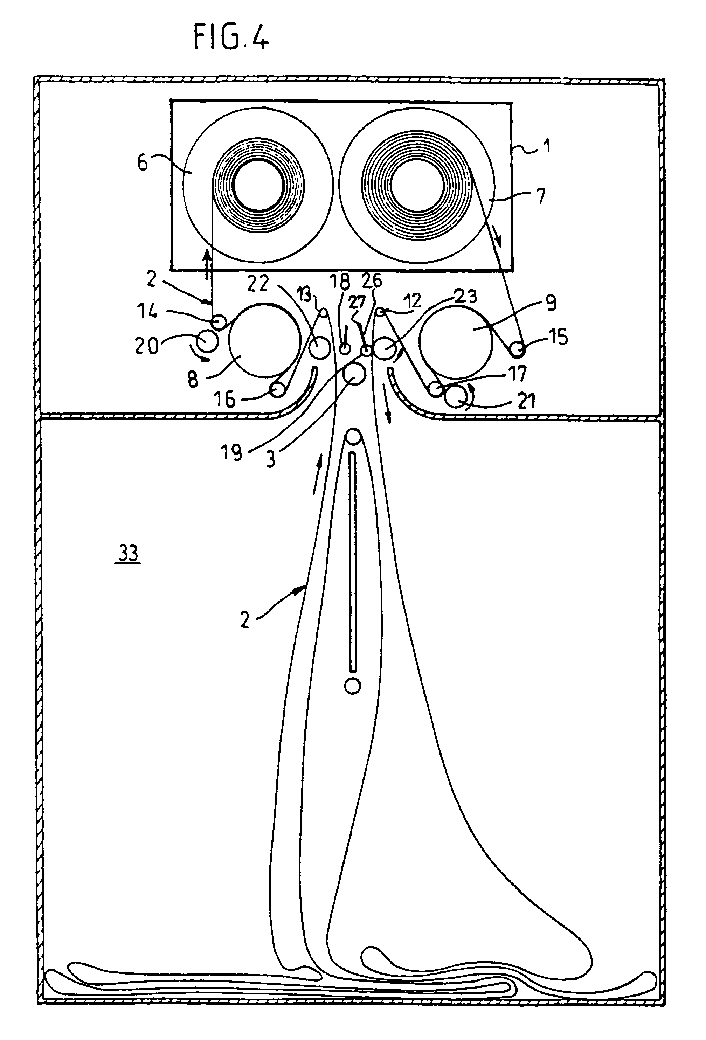

Comme visible à la figure 3, le détecteur 3 est composé d'un rouleau fou 25 monté sur un chariot 24 mobile verticalement, donc transversalement au trajet la de la bande. Après mise en place de la cassette, le chariot 24 se déplace automatiquement pour que le rouleau 25 tire la bande 2 vers la position de fonctionnement représentée en trait plein à la figure 2, ainsi qu'à la figure 3. La bande est alors tendue entre les rouleaux passifs 12, 13 et les détecteur 3, lequel fait décire à la bande une boucle de préengagement dans l'orifice d'entrée et sortie du magasin de stockage (33). Le magasin 33 est réalisé en cul-de-sac. Il s'élargit fortement sous les têtes 8, 9 (figure 4) tout en ayant partout une épaisseur correspondant à la largeur de la bande.

Le détecteur 3 a aussi pour fonction d'éviter une rupture de la bande lorsque la bande est tendue et que la bobine de lecture est entraînée à une vitesse supérieure à celle de déroulement de la bobine d'enregistrement. La présence de ce détecteur est préférable mais non indispensable : si le magasin 33 est transparent l'utilisateur peut voir le magasin de stockage se vider et la bande se tendre entre les rouleaux.

Lors de l'enregistrement en utilisation classique, la bobine de lecture 6 est active en enroulement et la bobine d'enregistrement 7 est active en déroulement, la bande 2 est mise en contact avec le rouleau entraîneur 21 et le porte-tête d'enregistrement 9 par la mise en oeuvre des rouleaux fous 15, 17, en déplaçant leurs chariots respectifs, par contre le porte-tête de lecture 8, les rouleaux entraîneurs 20, 22, 23, et les rouleaux fous 14, 16, 18, 19 sont au repcs.

En lecture, c'est à dire lorsque l'on désire visualiser une cassette préalablement enregistrée, la bobine de lecture 6 est active en déroulement et la bobine d'enregistrement 7 est active en enroulement, la bande 2 est mise en contact avec le porte-tête de lecture 8 et le rouleau entraîneur 20 par les rouleaux fous 14, 16. Par contre le porte-tête d'enregistrement 9, les rouleaux fous 15, 17, 18, 19, et les rouleaux d'entraîneurs 21, 22, 23 sont au repos.

Lors de cette lecture seule, l'utilisateur peut effectuer une avance rapide, la bande sera toujours en contact avec le rouleau entraîneur 20 et le porte-tête de lecture 8. Il peut aussi effectuer une lecture arrière rapide, au cours de laquelle la bande 2 sera en contact avec le porte-tête de lecture 8 et le rouleau entraîneur 22 ; dans ces deux cas les bobines de lecture 6 et d'enregistrement 7 auront des vitesses d'enroulement et de déroulement variables.

Dans ce mode d'utilisation classique du magnétoscope il est aussi possible d'obtenir des avances rapides et des retours rapides sans lecture ni enregistrement, les porte-tête de lecture 8 et d'enregistrement 9 étant au repos.

Dans toutes ces utilisations classiques du mangétoscope, les vitesses d'entraînement des bobines de lecture et d'enregistrement sont dépendantes l'une de l'autre, le magasin 33 reste toujours vide et le détecteur 3 est en contact permanent avec la bande 2.

Selon l'invention le magnétoscope peut de plus être commandé en lecture décalée. Dans ce cas, l'enregistrement étant actif, par le porte-tête 9, grâce au rouleau d'entraînement 21 et aux rouleaux passifs 15 et 17, la bobine de lecture 6 est mise au repos et le rouleau d'entraînement 23 est rendu actif grâce au rouleau fou 19.

Le rouleau 23 tire alors la bande vers le magasin de stockage 33. Ainsi, au fur et à mesure de l'enregistrement, au cours auquel la bande 2 est comme à l'habitude mise en contact avec les rouleaux d'entraînement 21, 23 et la tête d'enregistrement 9 grâce aux rouleaux fous actifs 15, 17, 19, la bande n'est pas tirée vers la bobine de lecture et tombe dans le magasin de stockage 33.

Durant ce stockage de la bande, le détecteur 3 n'est plus en contact avec ladite bande.

La mise en service de la lecture décalée se fait en activant la bobine de lecture 6, et en reprenant la bande 2, stockée dans le magasin 33, mise en contact avec le rouleau entraîneur 20 et le porte-tête de lecture 8 grâce aux rouleaux fous 14 et 16.

L'utilisateur peut effectuer une partie de cette lecture décalée sous forme accélérée afin de rattraper le temps et de suivre la fin de l'émission en direct sans pour autant interrompre l'enregistrement. Dans ce cas, la bande 2 est toujours en contact avec la tête de lecture 8 et le rouleau d'entraînement 20, qui est alors activé en vitesse rapide grâce à l'axe d'entraînement 4 de la bobine de lecture 6 qui possède un mode d'enroulement variable selon un procédé connu.

Lorsque le détecteur 3 est de nouveau en contact avec la bande 2 ce qui indique que le magasin 33 est vide, il stoppe la lecture rapide afin que la bande 2 ne se casse pas mais autorise une lecture à vitesse normale.

Toujours dans ce mode de lecture décalée l'utilisateur peut faire une lecture arrière ou une lecture arrière rapide ; la bande 2 est alors mise en contact avec le rouleau entraîneur 22, qui peut être activé en vitesse rapide ou normale et le porte-tête de lecture 8 grâce aux rouleaux fous 16, 18.

Enfin toujours en lecture décalée l'utilisateur peut effectuer une avance et un retour en vitesse rapide ou normale sans lecture ; la bande n'est alors plus en contact avec le porte-tête de lecture 8 mais est entraînée par le rouleau entraîneur 22 grâce au rouleau fou 18 en cas de retour, et enroulée par la bobine 6 grâce à l'axe d'entraînement 4 en cas d'avance.

Dans l'exemple ainsi décrit on a prévu un détecteur 3 qui a pour fonction de détecter la tension de la bande pour éviter une rupture. Mais il est possible de ne pas disposer un tel détecteur et de monter sur le rouleau 20 et l'axe 4 un dispositif dynamométrque taré en fonction de la résistance à la traction de la bande.

Mais on peut surtout placer des compte-tours sur les rouleaux entraîneurs afin de connaître la longueur de la bande en magasin, ce qui permet non seulement d'éviter de mettre la bande en tension mais aussi de connaître l'importance du décalage entre l'enregistrement et la lecture.

En pratique, il est préférable de ne pas remplir le magasin de stockage 33 lorsque l'appareil fonctionne durablement en enregistrement seul. On peut alors se contenter d'un magasin de stockage de plus faible dimension, correspondant environ à 1 heure d'enregistrement. Ainsi un exemple d'utilisation peut être :
- enregistrement seul à partir du début d'une émission : la bande dévidée par la bobine d'enregistrement est reprise par la bobine de lecture sans remplissage du magasin ;
- avant la fin de l'émission, l'utilisateur veut lire le début de l'émission sans interrompre l'enregistrement : il arrête la bobine de lecture puis la met en marche arrière rapide pour envoyer la bande enregistrée dans le magasin 33, réinverse le sens de rotation de la bobine de lecture pour commencer la lecture à vitesse normale ou non, avec possibilité de marche arrière. De la tête d'enregistrement, la bande va dans le magasin ;
- l'utilisateur est interrompu par un appel téléphonique il commande une pause de lecture, la bobine de lecture s'arrête. De la tête d'enregistrement la bande continue d'aller dans le magasin ;
- l'utilisateur veut rattraper le temps : il lit la bande en accéléré jusqu'à ce que le magasin 33 soit vide, puis il suit l'émission en direct ;
- au contraire, l'utilisateur veut cesser définitivement la lecture tout en continuant d'enregistrer ; il actionne une commande d'"arrêt lecture" qui provoque automatiquement la désactivation de la tête de lecture et la rotation accélérée de la bobine de lecture dans le sens de l'enroulement jusqu'à épuisement de la bande dans le magasin 33, à la suite de quoi l'enregistrement continue de manière "normale".

## Revendications

1. Appareil permettant l'enregistrement et la lecture simultanée ou décalée d'une bande d'enregistrement telle qu'une bande de magnétoscope ou de magnétophone, comportant une tête d'enregistrement (9), des moyens pour faire circuler la bande (2) devant la tête d'enregistrement vers et respectivement à partir d'une bobine d'enregistrement (6), une tête de lecture (8), des moyens pour faire circuler la bande devant la tête de lecture vers et respectivement à partir d'une bobine de lecture (7), les têtes étant munies l'une et l'autre de moyens permettant de les mettre en oeuvre indépendamment l'une de l'autre, et d'autre part un magasin de stockage (33), situé fonctionnellement entre les deux têtes (8, 9) pour recevoir et stocker une partie de la bande lorsque la région de la bande positionnée devant la tête de lecture (8) est distante de la région de la bande située devant la tête d'enregistrement (9), et ledit appareil comprenant des moyens de montage (28) pour une cassette (1) à deux bobines (6, 7) associées chacune à l'une des extrémités de la bande, les têtes d'enregistrement et de lecture étant agencées pour coopérer chacune avec l'une des bobines de la cassette, qui constituent en service l'une la bobine d'enregistrement et l'autre, respectivement, la bobine de lecture, caractérisé en ce que l'appareil comprend en outre des moyens (3, 24, 25) pour amener la bande en position relativement au magasin de stockage (33) après mise en place de la cassette, le magasin de stockage stockant ladite bande en plis lâches et aléatoires, et en ce que l'appareil comprend des moyens (8,22,4) pour amener la bande en marche arrière par rapport à la direction d'enregistrement depuis la bobine de lecture (7) vers le magasin de stockage (33).

2. Appareil selon la revendication 1, caractérisé en ce qu'il comprend en outre des rouleaux (18, 22) permettant de déplacer la bande de la bobine de lecture (7) vers le magasin de stockage (33) à différentes vitesses en marche arrière, avec ou sans lecture de ladite bande.

3. Appareil selon la revendication 1 ou 2, caractérisé en ce que le magasin de stockage (33) est en position verticale et a une entrée supérieure disposée entre lesdites têtes de lecture (8) et d'enregistrement (9).

4. Appareil selon l'une des revendications 1 à 3, caractérisé en ce que le magasin de stockage (33) a dans le sens de la largeur de la bande (2) une dimension égale à la largeur de la bande.

5. Appareil selon l'une des revendications 1 à 4, caractérisé par des moyens (3 24, 25) pour détecter l'épuisement de la longueur de bande contenue dans le magasin (33) .

6. Appareil selon l'une des revendications 1 à 5, caractérisé en ce que lesdits moyens pour amener la bande en position comprennent des moyens (24, 25) pour tirer une partie de la bande (2) en boucle vers l'intérieur du magasin, de façon que ladite partie de la bande entre et sorte du magasin de stockage par l'entrée de celui-ci.

7. Appareil selon la revendication 6, caractérisé en ce que les moyens pour tirer une partie de la bande comprennent un rouleau fou (25) déplaçable verticalement sur un chariot (24) pour tirer la bande (2) en position de fonctionnement vers l'intérieur du magasin à partir de la position initiale lors de la mise en place de la cassette.

8. Appareil selon la revendication 7, caractérisé en ce qu'à partir d'une situation où une réserve de ladite bande (2) est stockée dans le magasin (33), le rouleau fou (25) est utilisé pour indiquer que ladite réserve est épuisée lorsqu'il est sollicité par la bande vers l'extérieur du magasin.

9. Appareil selon l'une quelconque des revendications 1 à 7, caractérisé en ce qu'il comporte des compte-tours sur les mécanismes de guidage et d'entraînement afin de connaître l'importance du décalage entre l'enregistrement et la lecture.

10. Appareil selon l'une quelconque des revendications 1 à 9, caractérisé en ce que le magasin est associé à des moyens pour exercer une action de soufflage ou d'aspiration sur les plis aléatoires formés par la bande.

11. Appareil selon l'une des revendications 1 à 10, caractérisé en ce que le magasin de stockage (33) a pour la bande une ouverture d'entrée/sortie relativement étroite située entre les deux têtes (8, 9) et associée à des moyens (3, 24, 25) pour préengager une boucle de bande vers l'intérieur du magasin de stockage (33).

## Patentansprüche

1. Gerät, welches das gleichzeitige oder zeitversetzte Aufnehmen und Abspielen eines Aufnahmebandes, wie beispielsweise eines Bandes eines Video-Bandaufnahmegeräts oder eines Tonbandgeräts ermöglicht, bestehend aus einem Aufnahmekopf (9), Mitteln für das Ablaufen des Bandes (2) vor dem Aufnahmekopf (9) zu bzw. von einer Aufnahmespule (6), einem Abspielkopf (8), Mitteln für das Ablaufen des Bandes vor dem Abspielkopf zu bzw. von einer Abspielspule (7), wobei die Köpfe jeweils mit Mitteln versehen sind, die es ermöglichen, sie voneinander unabhängig einzusetzen, und andererseits einem Speicherbehälter (33), der sich funktional zwischen den beiden Köpfen (8, 9) befindet, um einen Teil des Bandes aufzunehmen und zu speichern, wenn der vor dem Abspielkopf (8) befindliche Teil des Bandes von der Bandregion entfernt ist, die sich vor dem Aufnahmekopf (9) befindet, und bestehend aus Mitteln zur Montage (28) einer Kassette (1) mit zwei Spulen (6, 7), die jeweils mit einem der Bandenden verbunden sind, wobei der Aufnahmekopf und der Abspielkopf derart angeordnet sind, daß sie jeweils mit einer der Spulen der Kassette zusammenwirken, wobei die eine während des Betriebs die Aufnahmespule bzw. die andere die Abspielspule darstellt, dadurch gekennzeichnet, daß das Gerät ferner Mittel (3, 24, 25) umfaßt, um nach Einlegen der Kassette das Band in bezug auf den Speicherbehälter (33) in Position zu bringen, wobei der Speicherbehälter das Band in lockeren und zufallsbedingten Falten speichert, und daß das Gerät Mittel (8, 22, 4) umfaßt, um das Band in bezug auf die Aufnahmerichtung von der Abspielspule (7) zu dem Speicherbehälter (33) rückwärts laufen zu lassen.

2. Gerät nach Anspruch 1, dadurch gekennzeichnet, daß es ferner Rollen (18, 22) umfaßt, die es ermöglichen, das Band von der Abspielspule (7) zu dem Speicherbehälter (33) mit verschiedenen Geschwindigkeiten rückwärts laufen zu lassen, mit oder ohne Abspielen des Bandes.

3. Gerät nach Anspruch 1 oder 2, dadurch gekennzeichnet, daß sich der Speicherbehälter (33) in vertikaler Lage befindet und einen oberen Eingang aufweist, der zwischen dem Abspielkopf (8) und dem Aufnahmekopf (9) angeordnet ist.

4. Gerät nach einem der Ansprüche 1 bis 3, dadurch gekennzeichnet, daß der Speicherbehälter (33) in Richtung der Breite des Bandes (2) eine Abmessung gleich der Bandbreite aufweist.

5. Gerät nach einem der Ansprüche 1 bis 4, gekennzeichnet durch Mittel (3; 24, 25) zur Erfassung des Endes der in dem Speicher (33) enthaltenen Bandlänge.

6. Gerät nach einem der Ansprüche 1 bis 5, dadurch gekennzeichnet, daß die Mittel, um das Band in Position zu bringen, Mittel (24, 25) umfassen, um einen Teil des Bandes (2) in Form einer Schleife in das Innere des Speichers zu ziehen, so daß dieser Bandteil durch den Eingang des Speicherbehälters in diesen eintritt und daraus austritt.

7. Gerät nach Anspruch 6, dadurch gekennzeichnet, daß die Mittel, um einen Teil des Bandes zu ziehen, eine frei drehbaren Rolle (25) umfassen, die vertikal auf einem Wagen (24) verschiebbar ist, um das Band (2) in Betriebsposition in das Innere des Speichers von der Ausgangsposition beim Einlegen der Kassette aus zu ziehen.

8. Gerät nach Anspruch 7, dadurch gekennzeichnet, daß ab einer Situation, in der eine Reserve dieses Bandes (2) in dem Speicher (33) gespeichert wird, die frei drehbare Rolle (25) dazu verwendet wird, um anzuzeigen, daß diese Reserve erschöpft ist, wenn sie von dem Band aus dem Speicher nach außen gedrückt wird.

9. Gerät nach einem der Ansprüche 1 bis 7, dadurch gekennzeichnet, daß es einen Drehzahlmesser auf den Führungs- und Antriebsmechanismen umfaßt, um die Größe der Zeitversetzung zwischen der Aufnahme und dem Abspielen zu kennen.

10. Gerät nach einem der Ansprüche 1 bis 9, dadurch gekennzeichnet, daß der Speicher mit Mitteln verbunden ist, um eine Gebläse- oder Ansaugwirkung auf die zufällig von dem Band gebildeten Falten auszuüben.

11. Gerät nach einem der Ansprüche 1 bis 10, dadurch gekennzeichnet, daß der Speicherbehälter (33) für das Band eine relativ enge Eingangs-/ Ausgangsöffnung aufweist, die sich zwischen den beiden Köpfen (8, 9) befindet und mit Mitteln (3, 24, 25) verbunden ist, um eine Bandschleife vorher in das Innere des Speicherbehälters (33) eingreifen zu lassen.

## Claims

1. Apparatus with which the recording and simultaneous or time-delayed playback of a recording tape such as a videotape recorder or tape recorder tape can be carried out, the apparatus comprising a recording head (9), means for having the tape (2) circulate in front of the recording head towards and from a recording reel (6) respectively, a reading head (8), means for having the tape circulate in front of the reading head towards and from the playback reel (7) respectively both the heads being provided with means enabling them to be actuated independently of each other and in addition a storage hopper (33), located operatively between the two heads (8 and 9) for receiving and storing a portion of the tape when the tape region facing the reading head (8) is at a distance from the tape region facing the recording head (9), and said apparatus including fitting means (28) for a cassette (1) with two reels (6 and 7) each of which is associated with one of the ends of the tape, the recording and reading heads being arranged so that each one cooperates with one of the reels of the cassette one of which in operation constitutes the recording reel and the other the playback reel respectively, characterised in that the apparatus moreover includes means (3, 24 and 25) for bringing the tape into position in relation to the storage hopper (33) after the insertion of the cassette, said storage hopper storing the tape in loose and random folds, and in that the apparatus comprises means (8, 22, 4) for moving the tape in reverse with respect to the recording direction, from the playback reel (7) towards the storing hopper (33).

2. Apparatus according to claim 1, characterised by further comprising rolls (18, 22) allowing to displace the tape from the playback reel (7) towards the storage hopper (33) at different speeds in reverse, with or without the tape being read.

3. Apparatus according to claim 1 or 2, characterized in that the storage hopper (33) is in a vertical position and has a upper entry disposed between the said reading head (8) and the said recording head (9).

4. Apparatus according to one of claims 1 to 3, characterized in that the storage hopper (33) has, in the direction of the width of the tape (2), a dimension equal to the width of the tape.

5. Apparatus according to one of claims 1 to 4, characterized by means (3 ; 24, 25) for detecting the exhaustion of the length of tape contained in the hopper (33).

6. Apparatus according to one of claims 1 to 5, characterized in that the said means for bringing the tape into position include means (24, 25) for drawing a portion of the tape (2) into a loop towards the inside of the hopper in such a way that the said portion of the tape enters and leaves the storage hopper through the entry thereof.

7. Apparatus according to claim 6, characterized in that the means for drawing a portion of the tape include an idle roll (25) which can be displaced vertically on a carriage (24) so as to draw the tape (2) into the operating position towards the inside of the hopper from the initial position when the cassette is inserted.

8. Apparatus according to claim 7, characterized in that from a situation in which a reserve of the said tape (2) is stored in the hopper (33), the idle roll (25) is used to indicate that the said reserve has been used up when it is stressed by the tape towards the outside of the hopper.

9. Apparatus according to any one of claims 1 to 7, characterized in that it includes revolution counters on the guide and drive mechanisms so as to know the size of the offset between recording and playback.

10. Apparatus according to any one of claims 1 to 9, characterized in that the hopper is associated with means for carrying out a blowing or suction action on the random folds formed by the tape.

11. Apparatus according to any one of claims 1 to 10, characterized in that the storage hopper (33) has, for the tape, a relatively narrow entry/outlet opening located between the two heads (8, 9) and associated with means (3, 24, 25) for pre-engaging a loop of tape towards the inside of the storage hopper (33).
